# EUROPEAN PATENT APPLICATION

(11) **EP 4 768 297 A2**
(43) Date of publication of application: **01.07.2026**
(21) Application number: 25226540.0
(22) Date of filing: 22.12.2025
(51) Int. Cl.: B60K 35/29, B60K 35/60, B60K 35/81

(54) **IN-VEHICLE SYSTEM, VEHICLE, INFORMATION PROCESSING APPARATUS, INFORMATION PROCESSING METHOD, AND PROGRAM**

(30) Priority: 27.12.2024 JP 2024232778
(71) Applicant: Toyota Jidosha Kabushiki Kaisha, Toyota-shi, Aichi-ken 471-8571 (JP)
(72) Inventor: TANAKA, Seiichi, Aichi-ken, 471-8571 (JP); FUJIWARA, Tatsuro, Aichi-ken, 471-8571 (JP); TSUJINO, Miki, Aichi-ken, 471-8571 (JP); ONISHI, Kanta, Aichi-ken, 471-8571 (JP); KOBATAKE, Yasuhiro, Aichi-ken, 471-8571 (JP); YOKOYAMA, Yuu, Aichi-ken, 471-8571 (JP)
(74) Representative: D Young & Co LLP

(57) **Abstract**

An in-vehicle system comprises a first display device and a second display device.

The in-vehicle system has a storage and a processor.

The storage stores first data that is data to be used to check a gesture performed by a user of a vehicle (1) and detected by a sensor against a first gesture.

The processor configured to execute detecting that the user has performed the first gesture based on the first data and an output of the sensor, and in a case where the first gesture is detected, outputting at the second display device, a predetermined user interface included in content that is being output at the first display device.

## Description

### BACKGROUND

### Technical Field

The present disclosure relates to a vehicle technique.

### Description of the Related Art

There is a technique of providing information for reducing burden of a driver who drives an automobile. In association with this, for example, Japanese Patent No. 7306210 discloses an in-vehicle system in which a display for providing information is arranged in the vicinity of a steering wheel.

### SUMMARY

The present disclosure is directed to improving operability when a user of a vehicle operates in-vehicle equipment.

One aspect of the present disclosure is an in-vehicle system including a first display device and a second display device, the in-vehicle system comprising:
a storage configured to store first data that is data to be used to check a gesture performed by a user of a vehicle and detected by a sensor against a first gesture; and
a processor configured to execute
detecting that the user has performed the first gesture based on the first data and an output of the sensor, and
in a case where the first gesture is detected, outputting at the second display device, a predetermined user interface included in content that is being output at the first display device.

One aspect of the present disclosure is an in-vehicle system including a first display device and a second display device, the in-vehicle system comprising:
a processor configured to execute
detecting a first gesture performed by a user of a vehicle using a sensor, and
in a case where the first gesture is detected, outputting at the second display device, a predetermined user interface included in content that is being output at the first display device.

One aspect of the present disclosure is an information processing apparatus included in an in-vehicle system including a first display device and a second display device, the information processing apparatus comprising:
a processor configured to execute
detecting a first gesture performed by a user of a vehicle using a sensor, and
in a case where the first gesture is detected, outputting at the second display device, a predetermined user interface included in content that is being output at the first display device.

One aspect of the present disclosure is an information processing method to be executed by an information processing apparatus included in an in-vehicle system including a first display device and a second display device, the information processing method comprising:
a step of detecting a first gesture performed by a user of a vehicle using a sensor; and
a step of, in a case where the first gesture is detected, outputting at the second display device, a predetermined user interface included in content that is being output at the first display device.

Further, another aspect includes a vehicle on which the above-described in-vehicle system is mounted, a program for causing a computer to execute the above-described information processing method, or a computer-readable storage medium storing the program in a non-transitory manner.

According to the present disclosure, it is possible to improve operability when a user of a vehicle operates in-vehicle equipment.

### BRIEF DESCRIPTION OF THE DRAWINGS

Fig. 1 is a view illustrating a vehicle interior of a vehicle 1 according to a first embodiment.
Fig. 2 is an enlarged view of a steering wheel 4 and therearound.
Fig. 3 is a view illustrating an example of components of the vehicle 1.
Fig. 4 is a view illustrating an example of components of a vehicle ECU 10.
Fig. 5 is a view illustrating a list of screens to be output at an outer display.
Fig. 6A-B are views illustrating an example of a screen to be output at the outer display.
Fig. 7A-D are views illustrating an example of a screen to be output at the outer display.
Fig. 8 is a view illustrating a list of screens to be output at an inner display.
Fig. 9A-B are views illustrating an example of a screen to be output at the inner display.
Fig. 10A-D are views illustrating an example of a screen to be output at the inner display.
Fig. 11 is a view illustrating an example of a screen output at a center display.
Fig. 12 is a view illustrating an aspect in which an operation interfaces move from the center display.
Fig. 13 is a flowchart of processing to be executed by an HMI controller according to the first embodiment.
Fig. 14 is a flowchart of processing to be executed by an HMI controller according to a second embodiment.
Fig. 15 is a view illustrating an aspect in which the operation interfaces move from the outer display.
Fig. 16 is a view illustrating an example of a display device according to the modification.

### DESCRIPTION OF THE EMBODIMENTS

In recent years, in accordance with sophistication of an automobile, a display for providing information is becoming larger, or the number of displays is increasing.

For example, a method has been proposed in which a large touch panel display (hereinafter, a center display) is arranged between a driver's seat and a passenger's seat in a front portion of a vehicle cabin, and operation regarding the vehicle and information provision are collectively performed.

However, in such a method, in a case where a driver operates a component provided in the vehicle or confirms output information, a line of sight and the hand of the driver largely move. The movement of the line of sight and the hand of the driver is preferably made minimum for safety reasons of traveling of the vehicle.

To solve this problem, a vehicle system in which a display device including a touch panel is arranged in the vicinity of a steering wheel has been devised. This allows operation to be performed on in-vehicle equipment, and the like, without largely moving the hand.

However, the display device arranged in the vicinity of the steering wheel is small and thus cannot be a substitute for the center display.

In other words, a problem arises that if it is tried to utilize the display device arranged in the vicinity of the steering wheel, an information amount cannot be secured, and if it is tried to utilize the center display, a movement amount of the hand becomes large.

Thus, an in-vehicle system of the present disclosure moves part of content output at a display device present in a front portion of the vehicle cabin to the display device in the vicinity of the steering wheel in a case where a driver gives an instruction through a predetermined gesture.

An in-vehicle system according to one embodiment of this disclosure includes a first display device and a second display device, the in-vehicle system comprising:
a processor configured to execute
detecting a first gesture performed by a user of a vehicle using a sensor, and
in a case where the first gesture is detected, outputting at the second display device, a predetermined user interface included in content that is being output at the first display device.

The sensor is, for example, an image sensor such as an in-vehicle camera, which detects an image. Alternatively, the sensor may be an infrared image sensor, or the like.

The first gesture is a gesture determined in advance. For example, the first gesture may be action of moving the hand from a direction in which the first display device is located when viewed from the driver, to a direction in which the second display device is located. In other words, the first gesture may be a gesture of moving the hand from the first display device toward the second display device.

The controller causes the second display device to output a predetermined user interface included in content (such as a screen) output at the first display device if the first gesture performed by the user is detected. The predetermined user interface is typically a user interface component for performing touch operation such as a panel, a button, and a slider.

In this manner, the in-vehicle system according to one aspect of the present disclosure can output a user interface for operating in-vehicle equipment which is output at a certain display, at another display device (for example, a display device at hand of the driver). By this means, for example, only a user interface portion among the content displayed at the center display can be moved to a display device at hand of the driver, so that it is possible to improve operability upon operation of in-vehicle equipment.

Note that the first display device may be a display device arranged in a central portion of a vehicle width direction in a front portion of a vehicle, and the second display device may be a display device including a pair of display units arranged at positions on both sides of the steering wheel and including a touch panel.

The first display device may be a center display, or the like, and the second display device may be a display device provided near the hand of the driver. The pair of display units may have a configuration that allows touch operation by the touch panel.

According to such a configuration, it is possible to move the user interface from the center display located in the central portion of the vehicle width direction in the front portion of the vehicle to the display device at hand of the driver which can be easily operated by the driver.

Further, the controller may delete the user interface output at the second display device in response to the first gesture, from a screen of the first display device. In other words, the user interface may be moved between the display devices.

Further, the predetermined user interface may include a GUI component for operating a function of the vehicle.

Further, in a case where the sensor detects a second gesture of a user of the vehicle, the controller may delete the user interface output at the second display from a screen of the second display device and output the user interface at the first display device again.

The second gesture can be a gesture for returning the user interface moved to the second display device to the first display device.

Embodiments of the present disclosure will be described below based on the drawings. Configurations of the embodiments described below are examples, and the present disclosure is not limited to the configurations of the embodiments.

### (First Embodiment)

Outline of a vehicle system according to an embodiment will be described. The vehicle system according to the present embodiment includes a vehicle 1.

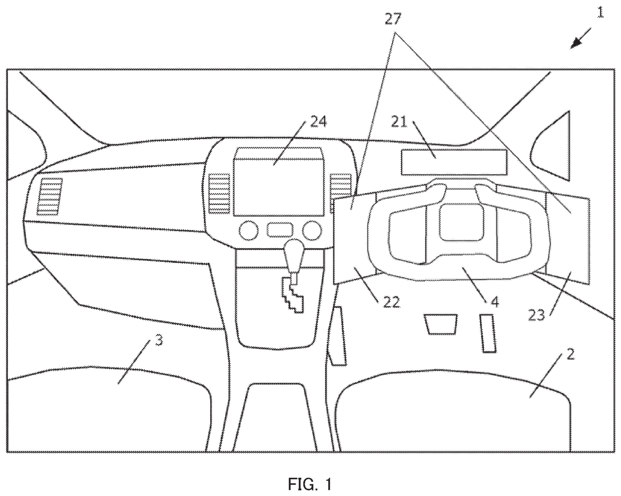

The vehicle 1 will be described with reference to Fig. 1.

Fig. 1 is a view illustrating a vehicle interior of the vehicle 1. As illustrated, a driver's seat 2 and a passenger's seat 3 are provided in a vehicle cabin of the vehicle 1. Note that the vehicle 1 of the present embodiment is a right-hand-drive vehicle, and the driver's seat 2 is provided in a right portion of the vehicle.

A steering wheel 4 is disposed in front of the driver's seat 2. Note that the steering wheel may have a circular shape or may have a U-shape (so-called, irregularly shaped steering wheel) as illustrated.

The steering wheel 4 is connected to a steering device provided in the vehicle 1 via a steering column. The steering column is covered with a column cover.

The passenger's seat 3 is provided on a left side of the driver's seat 2, and a center display 24 is disposed on a vehicle front side at an intermediate position of the driver's seat 2 and the passenger's seat 3. At the center display 24, for example, auxiliary information such as car navigation, content regarding entertainment such as audio and TV, or the like, is displayed.

A meter display 21 is provided on a vehicle front side of the steering wheel 4. The meter display 21 is a full-screen display that is located in front of the driver's seat 2 and provides various kinds of information to the driver of the vehicle 1. At the meter display 21, information necessary for traveling of the vehicle such as, for example, a speed of the vehicle (vehicle speed), an engine speed (in a case where the vehicle 1 includes an engine), a charging and discharging status (in a case where the vehicle 1 includes a battery for driving), and a traveling distance is displayed.

A pair of display devices 27 is provided in front of the driver's seat 2 in the vehicle cabin. The pair of display devices 27 includes touch panel displays respectively arranged at positions on both sides of the steering wheel 4. In the present embodiment, the display arranged on an inner side of the vehicle will be referred to as an inner display, and the display arranged on an outer side of the vehicle will be referred to as an outer display. The inner display 22 and the outer display 23 are connected to an instrument panel of the vehicle 1. One of the inner display 22 and the outer display 23 corresponds to a "pair of display units" in the present disclosure.

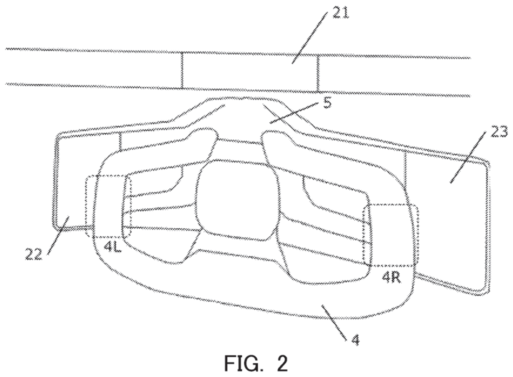

Detailed structures of the inner display 22 and the outer display 23 will be described with reference to Fig. 2.

The inner display 22 and the outer display 23 are vertically long displays and connected to a support portion 5 that is a member that supports the respective displays. The support portion 5 has a shape protruding in a left and right direction of the steering wheel. The outer display 23 is connected to a right end portion of the support portion 5 toward a front portion of the vehicle, and the inner display 22 is connected to a left end portion toward the front portion of the vehicle. By this means, display surfaces of the displays can be arranged in the vicinity of a gripping portion of the steering wheel 4.

Note that the above description is an example in a case where the vehicle 1 is a right-hand-drive vehicle, and in a case where the vehicle 1 is a left-hand-drive vehicle, the right side and the left side are inverted. In other words, the outer display 23 is connected to the left end portion of the support portion 5 toward the front portion of the vehicle, and the inner display 22 is connected to the right end portion toward the front portion of the vehicle.

The support portion 5 may also serve as a column cover that covers the steering column. The support portion 5 has a shape of extending in a left direction and a right direction (vehicle width direction) from a portion at which the steering column penetrates, and each extending toward a rear portion of the vehicle and bending so that an angle of each portion becomes small with respect to the left and right direction of the steering wheel.

Further, the inner display 22 and the outer display 23 are arranged so as to have an angle with respect to the left and right direction of the steering wheel and so as to be inclined toward the steering wheel. In other words, the inner display 22 is arranged so that a portion on the inner side of the vehicle protrudes more to the rear portion of the vehicle, and the outer display 23 is arranged so that a portion on the outer side of the vehicle protrudes more to the rear portion of the vehicle. In this manner, the inner display 22 and the outer display 23 are arranged so as to respectively face the driver.

A region 4R indicated with a dashed line in Fig. 2 is a portion (gripping portion) of the steering wheel 4 to be gripped by the right hand, and a region 4L indicated with a dashed line in Fig. 2 is a portion (gripping portion) of the steering wheel 4 to be gripped by the left hand. By the support portion 5 having the shape described above, positions of the inner display 22 and the outer display 23 in a vehicle front-back direction can be made closer to the gripping portions of the steering wheel 4. Thus, a movement amount of the hand in a case where the driver performs touch operation on the inner display 22 or the outer display 23 during driving can be made smaller.

### [System Configuration]

Configurations of respective devices constituting a vehicle system of the vehicle 1 will be described next.

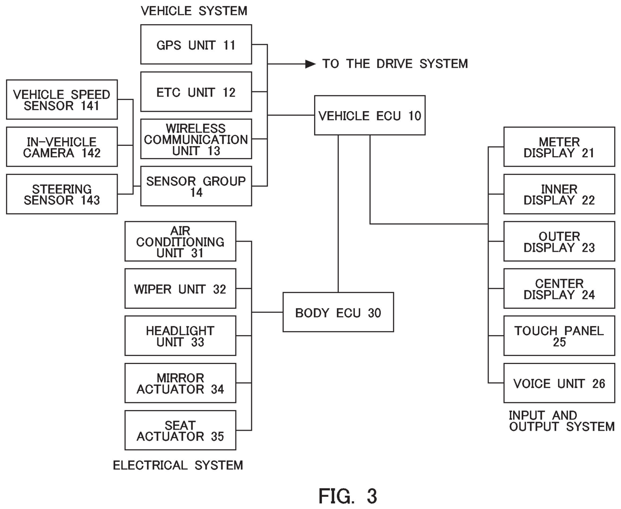

First, components of the vehicle 1 will be described. Fig. 3 is a view schematically illustrating an example of the configuration of the vehicle 1. The vehicle 1 includes a vehicle-related system, an electrical system, and an input/output system.

The vehicle-related system is a system that controls movement of the vehicle 1. The vehicle-related system includes a plurality of components related to traveling of the vehicle.

The input/output system is a system that provides information to an occupant of the vehicle 1 and acquires an input from the occupant. The input/output system includes a plurality of components that inputs/outputs information.

The electrical system is a system that controls electrical components provided in a body of the vehicle. The electrical system includes a plurality of components regarding the electrical components provided in the body of the vehicle.

The components included in each system may include a plurality of electrical components and an ECU that controls the electrical components.

Each of the vehicle ECU 10 and the body ECU 30 can be configured as a computer including a processor (such as a CPU and a GPU), a main memory (such as a RAM and a ROM), and an auxiliary memory (such as an EPROM, a hard disk drive and a removable medium). In the auxiliary memory, an operating system (OS), various kinds of programs, various kinds of tables, and the like, are stored, and each function (software module) that matches a predetermined purpose as will be described later can be implemented by a program stored therein being executed. However, some or all of the functions may be implemented as hardware modules by, for example, a hardware circuit such as an ASIC and an FPGA.

A plurality of components related to traveling of the vehicle is connected to the vehicle ECU 10.

The GPS unit 11 is a unit for acquiring position information of the vehicle 1. The GPS unit 11 includes a GPS antenna and a positioning module for measuring position information. The GPS antenna is an antenna that receives a positioning signal transmitted from a positioning satellite (also referred to as a GNSS satellite). The positioning module is a module that calculates position information based on the signal received by the GPS antenna.

An electronic toll collection system (ETC) unit 12 is a unit to be used for collecting a toll of a toll road through wireless communication. The ETC unit 12 includes an antenna and a communication module.

The wireless communication unit 13 includes an antenna and a communication module for performing wireless communication. The antenna is an antenna element that inputs/outputs a wireless signal. In the present embodiment, the antenna conforms to mobile communication (for example, mobile communication such as 3G, 4G and 5G). Note that the antenna may include a plurality of physical antennas. The communication module is a module for performing mobile communication.

Further, the wireless communication unit 13 may include communication modules other than the communication module for mobile communication. For example, the wireless communication unit 13 may include a communication module through Bluetooth (registered trademark). This enables wireless connection with a user terminal located inside the vehicle, so that it is possible to provide a service (such as, for example, a hands-free call) in coordination with the user terminal.

The sensor group 14 is a collection of a plurality of sensors for acquiring sensor data to be utilized in traveling of the vehicle. The sensors may include a sensor that acquires a physical amount or a sensor that acquires image data, and the like. In the present embodiment, a sensor (vehicle speed sensor 141) that detects a vehicle speed, and an image sensor (in-vehicle camera 142) that acquires an image in front of the vehicle will be exemplified as the sensors.

Note that components (such as, for example, an engine, a motor, a battery, and a transmission) belonging to a drive system may be further connected to the vehicle ECU 10.

A plurality of electrical components included in the vehicle is connected to the body ECU 30.

In the present embodiment, a car air conditioner, a wiper, a headlight, a sideview mirror, and a powered seat will be exemplified as the electrical components included in the vehicle.

An air conditioner unit 31 is a car air conditioner of the vehicle 1. The air conditioner unit 31 includes, for example, a cooling unit, a heating unit, a compressor, a capacitor, and the like. Further, the air conditioner unit 31 may include a controller for controlling these.

A wiper unit 32 includes a front wiper, a rear wiper, a motor for driving these, and the like.

A headlight unit 33 includes a headlight of the vehicle 1, and a unit for driving the headlight. The headlight is, for example, configured to be able to switch between high beam and low beam. Note that in a case where the headlight of the vehicle 1 is an adaptive headlight, it is also possible to control radiation of light based on a command from the body ECU. The headlight unit 33 may further include a taillight, a stop lamp, a direction indicator and/or a unit for driving these.

A mirror actuator 34 includes sideview mirrors disposed at left and right portions of the vehicle 1, and a drive unit for driving the mirrors. Angles of the sideview mirrors can be adjusted upward, downward, leftward, and rightward by the mirror actuator 34.

A seat actuator 35 includes a drive unit for adjusting positions of seats provided in the vehicle 1. Positions, heights, angles, and the like, of seating surfaces and backrests can be adjusted by the seat actuator 35.

A device for inputting/outputting information will be described next.

In the present embodiment, the vehicle 1 includes four displays of the meter display 21, the inner display 22, the outer display 23, and the center display 24 as displays for outputting information.

The meter display 21 is a display arranged in front of the driver, and information regarding the vehicle 1 is output at the meter display 21. While information regarding a state of the vehicle such as, for example, a vehicle speed, an engine speed, a fuel remaining amount, a battery remaining amount, a charging and discharging status, and a traveling distance is mainly output at the meter display 21, information other than this may be output.

The inner display 22 and the outer display 23 are displays arranged on both sides of the steering wheel and including touch panels. As described above, the inner display 22 is arranged on a vehicle center side, and the outer display 23 is arranged on a vehicle outer side.

In a case where the vehicle 1 is a right-hand-drive vehicle, the inner display 22 is arranged on a left side in a traveling direction of the vehicle, and the outer display 23 is arranged on a right side in the traveling direction of the vehicle. In a case where the vehicle 1 is a left-hand-drive vehicle, the inner display 22 is arranged on the right side in the traveling direction of the vehicle, and the outer display 23 is arranged on the left side in the traveling direction of the vehicle.

The center display 24 is a display arranged at the center of the vehicle. The center display 24 is arranged at a place where a display of a car navigation device has been arranged in the related art. At the center display 24, for example, auxiliary information such as car navigation, content regarding entertainment such as audio and TV, and the like, are displayed.

A touch panel 25 is a unit for detecting touch operation performed on the display described above. In the present embodiment, each of the inner display 22, the outer display 23, and the center display 24 includes the touch panel 25, and operation can be performed by touch. The touch panel 25 detects touch operation performed on these displays and transmits detected content to the vehicle ECU 10.

A speech unit 26 is a unit that inputs/outputs information by speech. The speech unit 26 may include, for example, a speaker and a microphone.

A detailed configuration of the vehicle ECU 10 will be described next.

The vehicle ECU 10 is connected to a vehicle-related system and a drive system (powertrain system), and thereby can control the vehicle 1. Further, the vehicle ECU 10 has a function of inputting/outputting information by components included in the input/output system, and a function of controlling an electrical system via the body ECU 30 that controls the electrical system.

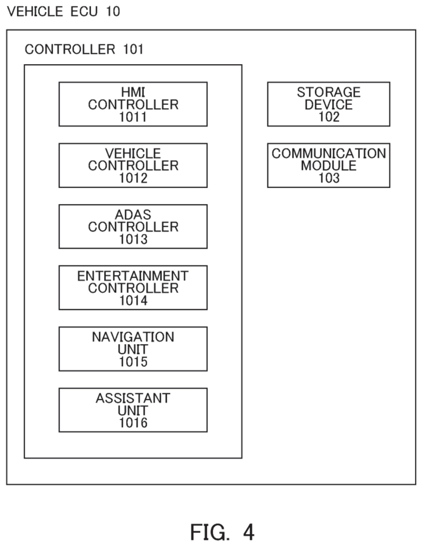

Fig. 4 is a view illustrating a detailed configuration of the vehicle ECU 10.

The vehicle ECU 10 includes a control device 101, a main memory 102, and a communication module 103.

The control device 101 is an arithmetic unit that implements various kinds of functions of the vehicle ECU 10 by executing predetermined programs. The control device 101 can be implemented by, for example, a hardware processor such as a CPU. Further, the control device 101 may include a RAM, a read only memory (ROM), a cache memory, and the like.

In the present embodiment, the control device 101 included in the vehicle ECU 10 includes six software modules of an HMI controller 1011, a vehicle controller 1012, an ADAS controller 1013, an entertainment controller 1014, a navigation unit 1015, and an assistance unit 1016. Each software module may be implemented by the control device 101 (such as a CPU) executing a program stored in a main memory 102 which will be described later. Information processing to be executed by the software module is synonymous with information processing to be executed by the control device 101 (such as the CPU).

The HMI controller 1011 generates a user interface for controlling various kinds of components included in the vehicle and provides the user interface to an occupant of the vehicle via the input/output system. Further, the HMI controller 1011 passes information (for example, a command for implementing control designated by the user) input via the input/output system to the corresponding software module.

This makes it possible to control any component included in the vehicle via the user interface.

Note that in the following description, a command for controlling a component included in the vehicle 1, generated by the user will be referred to as a "user command". For example, a command for changing a temperature of the air conditioner, a command for changing a drive mode, a command for making a telephone call, a command for playing music, or the like, is an example of a "user command".

Note that the component included in the vehicle may be an electrical component such as a headlight and a wiper. Further, the component included in the vehicle may be an in-vehicle computer or a software module (such as, for example, autonomous traveling software and navigation software) to be executed by the in-vehicle computer.

Note that the HMI controller 1011 selects an output destination of the user interface from a plurality of displays (the meter display 21, the inner display 22, the outer display 23, and the center display 24) according to a type of a component to be controlled. A specific configuration will be described later.

The vehicle controller 1012 controls components included in the vehicle-related system or components included in the drive system.

The vehicle controller 1012 may control a target component (for example, a drive motor) based on a command (for example, an acceleration command) received from another component (for example, the ADAS controller 1013 which will be described later) or may control a target component (for example, the headlight unit) based on a user command (for example, a command of turning on the headlight) acquired via the HMI controller 1011.

The ADAS controller 1013 controls an advanced driver-assistance system. The ADAS controller 1013 implements driving assistance such as cruise control, precrash safety, and lane keeping assistance by generating a control command of the vehicle, for example, based on sensor information acquired from the in-vehicle sensor included in the sensor group 14. The ADAS controller 1013, for example, controls the vehicle-related system and the drive system by transmitting a control command to the vehicle controller 1012.

The entertainment controller 1014 performs control regarding entertainment to be provided to the occupant of the vehicle. Examples of a function regarding entertainment can include, for example, an audio function and a TV/radio function.

The navigation unit 1015 provides a car navigation function. The navigation unit 1015 can generate and provide rout guidance of the vehicle based on the position information acquired from the GPS unit 11 and traffic information acquired from the wireless communication unit 13. The navigation unit 1015, for example, may accept designation of a destination and a waypoint of the vehicle and may output information regarding the generated route via the HMI controller 1011.

The assistance unit 1016 provides information to the occupant of the vehicle by executing a language model that enables dialogue in natural language. The language model may be, for example, a large language model (LLM). For example, information can be provided in natural language by executing the LLM having information regarding the occupant of the vehicle. Note that in a case where there is a plurality of occupants of the vehicle, the assistance unit 1016 may acquire language models corresponding to respective occupants via a network and execute any language model.

The main memory 102 is means for storing information and is constituted with a storage medium such as a RAM, a magnetic disc, and a flash memory. In the main memory 102, a program to be executed at the control device 101, data to be utilized by the program, and the like, are stored.

The communication module 103 is a communication interface for connecting the vehicle ECU 10 to a vehicle network. The communication module 103 is configured to be able to perform communication with a component included in the vehicle 1 via a network such as a controller area network (CAN).

Note that components can be omitted, replaced, and added as appropriate in a specific configuration of the vehicle ECU 10 in accordance with embodiments. For example, the control device 101 may include a plurality of hardware processors. The hardware processor may include a microprocessor, an FPGA, a GPU, and the like. Further, an input/output device (such as, for example, an optical drive) other than the exemplified devices may be added. Further, the vehicle ECU 10 may include a plurality of computers. In this case, hardware configurations of the respective computers may be the same or do not have to be the same.

### [Interface Screen to be Provided by HMI Controller]

A user interface to be provided by the HMI controller 1011 will be described next.

The HMI controller 1011 can generate a plurality of types of graphical user interface (GUI) screens and output the graphical user interface screens to the plurality of displays described above.

In the present embodiment, the HMI controller 1011 outputs information while aggregating information regarding control of the vehicle at the outer display 23 and aggregating information regarding convenience and comfortability of the occupant at the inner display 22. This enables the occupant of the vehicle 1 to intuitively recognize a display on which desired information is to be output between the left and right displays. Further, operating surfaces of the touch panels provided on the inner display 22 and the outer display 23 are arranged in the vicinity of the steering wheel. This can minimize a movement amount of the line of sight and the hand of the driver of the vehicle.

The HMI controller 1011 can switch a screen to be output at the outer display 23 among a plurality of types of screens.

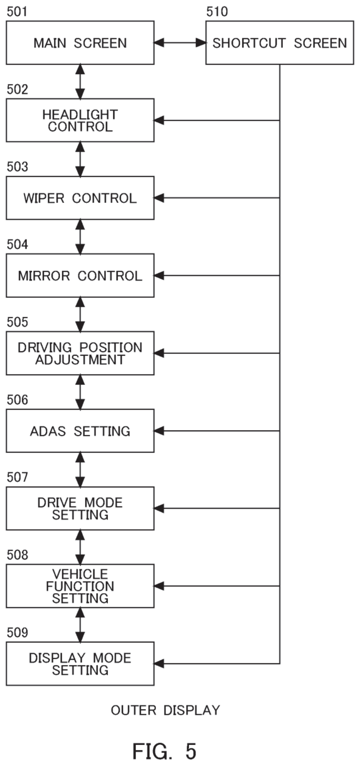

Fig. 5 is a view for describing transition of a plurality of types of screens to be output at the outer display 23. As illustrated, the HMI controller 1011 can output a plurality of screens, mainly, a main screen 501 at the outer display 23.

### (1) Main Screen 501

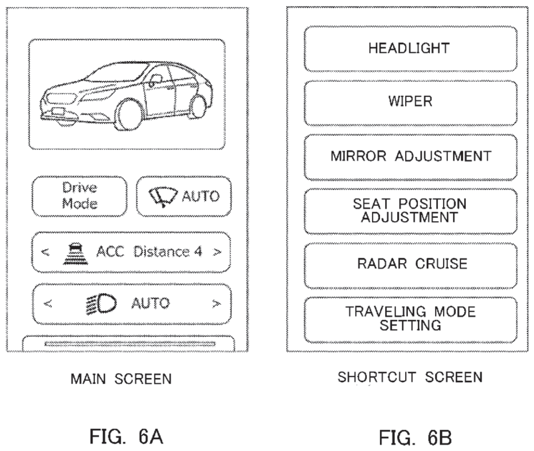

The main screen 501 is a screen to be normally displayed at the outer display during traveling. Fig. 6A is a view illustrating an example of the main screen 501. Display content of the main screen can be customized by the user.

### (2) Headlight Control Screen 502

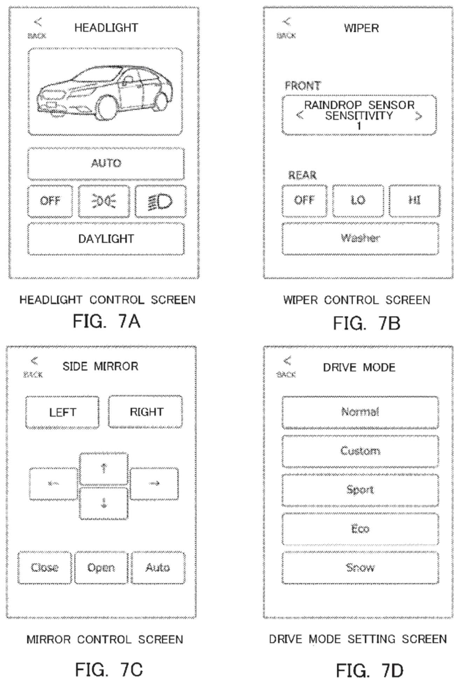

A headlight control screen 502 is a screen for setting a lighting state of the headlight included in the vehicle 1. Fig. 7A is a view illustrating an example of the headlight control screen 502.

On the headlight control screen 502, the lighting state (such as automated, turned-on, turned-off, parking light, and daylight) of the headlight can be selected. The vehicle controller 1012 controls the headlight unit 33 by generating a user command based on touch operation acquired via the HMI controller 1011 and transmitting the user command to the body ECU 30.

Further, the vehicle controller 1012 may acquire data indicating the lighting state of the headlight from the body ECU 30 and reflect the lighting state on the screen via the HMI controller 1011. For example, the vehicle controller 1012 may reflect a current lighting state of the headlight on a graphic of the vehicle drawn on the screen.

### (3) Wiper Control Screen 503

A wiper control screen 503 is a screen for setting an operating state of the wiper (front/rear) included in the vehicle 1. Fig. 7B is a view illustrating an example of the wiper control screen 503.

On the wiper control screen 503, an operating state (such as stopped, automated operation, intermittent operation, and continuous operation) of the wiper can be selected. The vehicle controller 1012 controls the wiper unit 32 by generating a user command based on the touch operation acquired via the HMI controller 1011 and transmitting the user command to the body ECU 30.

Further, the vehicle controller 1012 may acquire data indicating the operating state of the wiper from the body ECU 30 and reflect the operating state on the screen via the HMI controller 1011. For example, the vehicle controller 1012 may reflect a current operating state of the wiper on the graphic of the vehicle drawn on the screen.

### (4) Mirror Control Screen 504

A mirror control screen 504 is a screen for adjusting an expanded state and an angle of the sideview mirror included in the vehicle 1. Fig. 7C is a view illustrating an example of the mirror control screen 504.

On the mirror control screen 504, a state (stored/expanded state and an angle) of the sideview mirror can be selected. The vehicle controller 1012 controls the mirror actuator 34 by generating a user command based on the touch operation acquired via the HMI controller 1011 and transmitting the user command to the body ECU 30.

Further, the vehicle controller 1012 may acquire data indicating the state of the sideview mirror from the body ECU 30 and reflect the operating state on the screen via the HMI controller 1011. For example, the vehicle controller 1012 may reflect a current expanded/stored state of the sideview mirror on the graphic of the vehicle drawn on the screen.

### (5) Driving Position Adjustment Screen 505

A driving position adjustment screen 505 is a screen for adjusting a position/angle of the seat (a seating surface and a backrest) included in the vehicle 1 and a position/angle of the steering wheel.

On the driving position adjustment screen 505, positions and angles of the seat and the steering wheel can be set. The vehicle controller 1012 controls the seat actuator 35, and the like, by acquiring via the HMI controller 1011, the touch operation acquired via the HMI controller 1011, generating a user command based on the touch operation and transmitting the user command to the body ECU 30.

### (6) ADAS Setting Screen 506

An ADAS setting screen 506 is a screen for making a notification of an operating state of the advanced driver-assistance system included in the vehicle 1 and making settings.

For example, in a case where the advanced driver-assistance system included in the vehicle 1 includes an autocruise function, the user of the vehicle 1 can set a cruising speed, a distance between vehicles, whether or not to follow the preceding vehicle, whether or not to trace a lane, and the like, via the ADAS setting screen 506.

The information included in the ADAS setting screen 506 can be generated by the ADAS controller 1013.

### (7) Drive Mode Setting Screen 507

A drive mode setting screen 507 is a screen for setting a drive mode of the vehicle 1. Fig. 7D is a view illustrating an example of the drive mode setting screen 507.

For example, the user of the vehicle 1 can select a mode from a plurality of modes such as a normal mode, a sports mode, an energy saving mode, and a snow mode via the drive mode setting screen 507. The vehicle controller 1012 changes the drive mode of the vehicle based on the selection.

### (8) Vehicle Function Setting Screen 508

A vehicle function setting screen 508 is a screen for utilizing other functions of the vehicle 1. Examples of other functions of the vehicle 1 can include, for example, opening/closing of an electric rear door, adjustment of a suspension, and the like.

### (9) Display Mode Setting Screen 509

A display mode setting screen 509 is a screen for setting a type, and the like, of information to be displayed at the meter display 21. For example, in a case where a plurality of kinds of information other than a speed can be displayed at the meter display 21, the user of the vehicle 1 can customize information to be displayed at the meter display 21 via the display mode setting screen 509.

A screen can be switched among the plurality of screens as exemplified above by, for example, predetermined operation such as horizontal swipe being performed on, for example, the touch panel provided on the outer display 23.

Further, the HMI controller 1011 can display a shortcut screen 510 for jumping to each screen on the outer display 23. Fig. 6B is a view illustrating an example of the shortcut screen 510. The shortcut screen can be called by, for example, predetermined operation (for example, operation of swiping upward from a lower portion of the screen) being performed on each screen including the main screen 501. On the shortcut screen 510, a plurality of interfaces (for example, buttons) for transitioning to the respective screens is arranged, and the screen can move to a target screen by operation being performed on the interface.

In this manner, the HMI controller 1011 aggregates and outputs at the outer display 23 at least information regarding control of the vehicle.

The information regarding control of the vehicle is typically information related to traveling control of the vehicle. Examples of the information related to traveling control of the vehicle can include, for example, information for controlling components belonging to the vehicle-related system, information for controlling components belonging to the drive system, and the like. Further, information for controlling components necessary for causing the vehicle to appropriately travel such as a light and a wiper among components belonging to the electrical system can be also regarded as information related to traveling control of the vehicle.

Note that information not directly related to traveling control of the vehicle can be also output at the outer display 23 if the information is related to control of the vehicle. For example, information for controlling an electric door included in the vehicle may be output at the outer display 23.

In a similar manner, the HMI controller 1011 can switch a screen to be output at the inner display 22 among a plurality of types of screens.

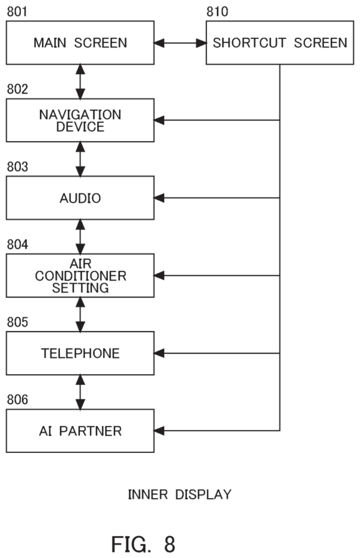

Fig. 8 is a view for describing transition of the plurality of types of screens to be output at the inner display 22. As illustrated, the HMI controller 1011 can output a plurality of screens, mainly a main screen 801, at the inner display 22.

### (1) Main Screen 801

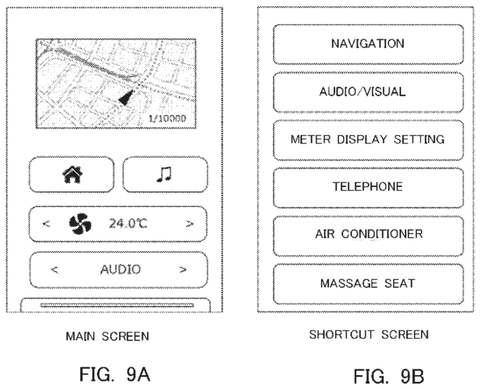

The main screen 801 is a screen to be normally displayed at the inner display during traveling. Fig. 9A is a view illustrating an example of the main screen 801. Display content of the main screen can be customized by the user.

### (2) Navigation Screen 802

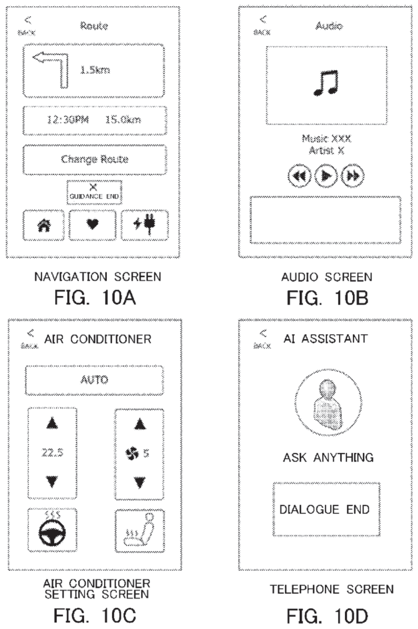

A navigation screen 802 is a screen related to car navigation. Fig. 10A is a view illustrating an example of the navigation screen 802. Information included in the navigation screen 802 is generated by the navigation unit 1015.

Note that in a case where map information in the car navigation is displayed at the center display 24, auxiliary information regarding a route of the vehicle 1 may be output at the navigation screen 802. Examples of the auxiliary information regarding the route can include, for example, guidance of a point at which the vehicle should turn right/left next, or the like, estimated time of arrival, a distance to go, and the like.

Further, part of the information displayed at the center display 24 and the user interfaces may be included in the navigation screen 802.

For example, user interfaces with high usage frequencies such as a button for starting rout guidance to home, a button for calling a bookmark, and a button for starting rout guidance to a charging spot can be arranged on the navigation screen 802.

### (3) Audio Screen 803

An audio screen 803 is a screen related to an audio function of the vehicle 1. Fig. 10B is a view illustrating an example of the audio screen 803. Information included in the audio screen 803 is generated by the entertainment controller 1014. The entertainment controller 1014 can acquire and play music via a network or a medium. The audio screen 803 can include information regarding music that is being played and an interface for selecting music.

### (4) Air Conditioner Setting Screen 804

An air conditioner setting screen 804 is a screen for controlling the car air conditioner included in the vehicle 1. Fig. 10C is a view illustrating an example of the air conditioner setting screen 804.

On the air conditioner setting screen 804, a temperature and airflow of the car air conditioner, and an air conditioning device (such as a steering heater, a seat heater and a defroster) to be operated can be set. The vehicle controller 1012 controls the air conditioner unit 31, and the like, by generating a user command based on operation performed on the screen and transmitting the user command to the body ECU 30.

Note that the car air conditioner is equipment of the vehicle 1 to be controlled by an external command, but is related to comfortability of the occupant, and thus, the air conditioner setting screen 804 is displayed at the inner display 22 instead of being displayed at the outer display 23.

### (5) Phone Screen 805

A phone screen 805 is a screen for wirelessly connecting to the user terminal and making a hands-free call. In a case where the wireless communication unit 13 includes a module for performing wireless communication with the user terminal, it is possible to make a phone call (or receive an incoming call), or the like, from the user terminal via the module.

### (6) AI partner screen 806

An AI partner screen 806 is a screen for having a dialogue with a virtual agent (AI partner) with which the occupant can have a dialogue in natural language. Fig. 10D is a view illustrating an example of the AI partner screen 806. The screen includes a character of the virtual agent, and the occupant of the vehicle can obtain information by having a dialogue with the character. A dialogue service in natural language is provided by the assistance unit 1016.

The AI partner screen 806 may include an interface for giving an instruction to the agent. Note that in a case where there is a plurality of occupants of the vehicle, the assistance unit 1016 may be configured to be able to execute any agents corresponding to respective persons. The AI partner screen 806 may include an interface for starting and ending a dialogue with the agent, an interface for switching the agent, and the like.

The plurality of screens as exemplified above can be switched by predetermined operation such as, for example, horizontal swipe being performed on, for example, the touch panel provided on the inner display 22.

Further, the HMI controller 1011 can cause a shortcut screen 810 for jumping to each screen to be displayed on the inner display 22. Fig. 9B is a view illustrating an example of the shortcut screen 810. The shortcut screen can be called by, for example, predetermined operation (for example, operation of swiping upward from a lower portion of the screen) being performed on each screen including the main screen 801. On the shortcut screen 810, a plurality of interfaces (for example, buttons) for transitioning to the respective screens is arranged, and the screen can transition to a target screen by operation being performed on the interface.

In this manner, the HMI controller 1011 aggregates and outputs at the inner display 22 information regarding convenience and comfortability of the occupant.

Note that information regarding a component such as a car air conditioner, which constitutes part of the vehicle but is related to convenience or comfortability of the occupant, may be output at the inner display 22 without being handled as information related to control of the vehicle.

In this manner, in a case where target information is applicable to both information regarding control of the vehicle and information regarding convenience (or comfortability) of the occupant, the HMI controller 1011 may selectively output one of the inner display 22 and the outer display 23 for the information in accordance with predetermined standards.

### [Movement of Operation Interfaces]

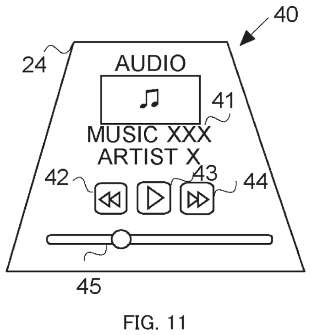

The HMI controller 1011 can output the plurality of screens described above, which can be output at the inner display 22 or the outer display 23, also at the center display 24. Fig. 11 is a view illustrating an example of a screen output at the center display. For example, while Fig. 10B is an example in a case where an audio screen 803 is output at the inner display 22, an area of the center display 24 is larger than an area of the inner display 22, and thus, in a case where the same screen is output at the center display 24, design of the screen and an information amount can change as illustrated in Fig. 11.

A screen 40 illustrated in Fig. 11 includes a title field 41, and a rewind button 42, a playback button 43, a fast-forward button 44, and a volume adjustment bar 45 which are operation interfaces. Here, the operation interface may be any button, or the like, for operating a function of the in-vehicle equipment. The operation interface is a specific example of a "predetermined user interface" in the present disclosure. Further, the input interface is a specific example of content to be output at the inner display 22 or the outer display 23.

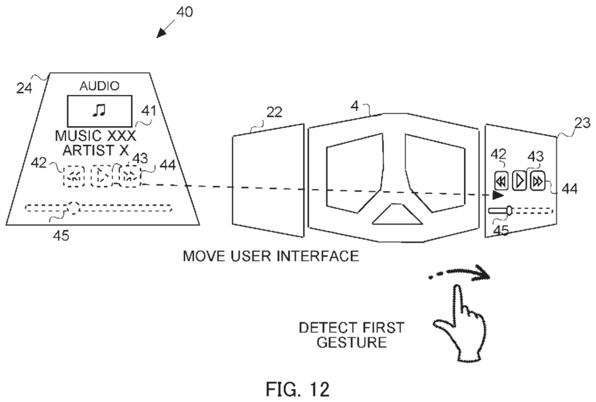

If the driver tries to operate the operation interface output at the center display 24 from a seated posture, there is a case where the driver cannot reach the operation interface with his/her hand. Thus, in the present embodiment, in a case where it is detected that a user of the vehicle has performed a predetermined gesture, the operation interfaces included in the screen that is being output at the center display 24 are moved from the center display 24 to the inner display 22 or the outer display 23. Fig. 12 is a view illustrating an aspect in which the operation interfaces described above are moved to the outer display 23. As illustrated in Fig. 12, if the first gesture is detected, the HMI controller 1011 outputs the operation interfaces (the rewind button 42, the playback button 43, the fast-forward button 44, and the volume adjustment bar 45) included in the screen 40 at the outer display 23. In this event, the HMI controller 1011 may delete these operation interfaces from the screen of the center display 24.

By this means, the in-vehicle system according to one aspect of the present disclosure can improve operability when the user of the vehicle operates the in-vehicle equipment.

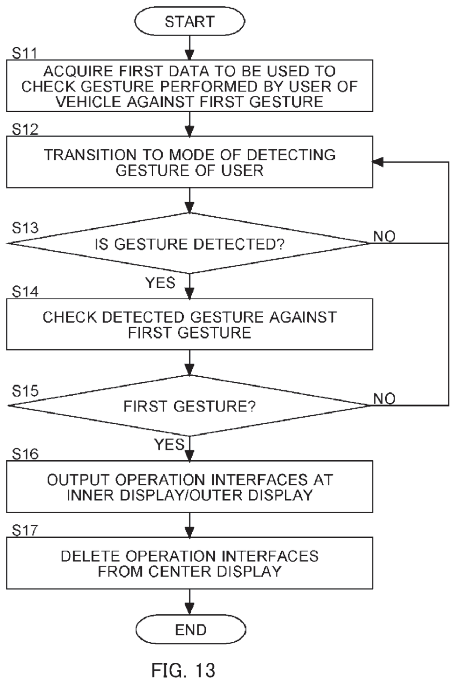

The processing described above will be described using a flowchart. Fig. 13 is a flowchart of processing to be executed by the HMI controller 1011 according to the first embodiment. The processing indicated in Fig. 13 is repeatedly executed while one of the plurality of screens described above is output at the center display 24. Note that in a case where the processing in Fig. 13 is executed again within a predetermined period since the processing in Fig. 13 has been executed once, the processing in Fig. 13 may be started from step S12. Note that the target screen can be, for example, one of the navigation screen 802, the audio screen 803, the air conditioner setting screen 804, the phone screen 805, and the AI partner screen 806 which are described above.

First, in step S11, the HMI controller 1011 acquires first data that is data to be used to check a gesture performed by the user of the vehicle against the first gesture. Specifically, the HMI controller 1011 performs communication with an external device to acquire the first data. The first data may be, for example, feature data indicating a form of the first gesture to be used to perform pattern recognition for checking the gesture performed by the user against the first gesture.

Here, the first gesture is a gesture representing some kind of predefined action. For example, the first gesture may be a gesture of moving the hand from the vicinity of the center display toward the vicinity of the outer display.

In step S12, the mode of the HMI controller 1011 transitions to a mode of detecting a gesture to be performed by the user. The HMI controller 1011 switches the mode to a standby mode to detect a gesture to be performed by the user using a sensor such as an in-vehicle camera.

In step S13, the HMI controller 1011 determines whether or not some kind of gesture performed by the user is detected. In the present step, a positive determination result is obtained in a case where the HMI controller 1011 determines that some kind of gesture performed by the user is detected.

In a case where a positive determination result is obtained in the present step, the processing transitions to step S14.

In a case where a negative determination result is obtained in the present step, the processing transitions to step S12.

In a case where the processing transitions to step S14, the HMI controller 1011 checks the detected gesture against the first gesture included in the first data. Specifically, the HMI controller 1011 grasps a form of the gesture performed by the user and detected by the sensor and a form of the first gesture through pattern recognition and checks the detected gesture against the first gesture by comparing both.

In step S15, the HMI controller 1011 determines whether or not the gesture performed by the user and detected by the sensor is the first gesture. In the present step, a positive determination result is obtained in a case where the HMI controller 1011 determines that the gesture performed by the user and detected by the sensor is the first gesture.

In a case where a positive determination result is obtained in the present step, the processing transitions to step S16.

In a case where a negative determination result is obtained in the present step, the processing transitions to step S12 again.

In a case where the processing transitions to step S16, the HMI controller 1011 outputs the operation interfaces included in the screen that is being output at the center display 24, at the inner display 22 or the outer display 23. An output destination of the operation interfaces may be determined as appropriate in accordance with types of screens. In the present example, the output destination is assumed to be the outer display 23.

For example, in a case where the HMI controller 1011 outputs the audio screen 803 at the center display 24, the HMI controller 1011 may output the rewind button 42, the playback button 43, the fast-forward button 44, and the volume adjustment bar 45 at the outer display 23.

In step S17, the HMI controller 1011 deletes the operation interfaces on the screen of the center display 24 corresponding to the operation interfaces output at the outer display 23 in step S16. For example, in a case where the HMI controller 1011 outputs the rewind button 42, the playback button 43, the fast-forward button 44, and the volume adjustment bar 45 at the outer display 23, the HMI controller 1011 deletes the components corresponding to these from the screen of the center display 24.

As described above, in a case where the predetermined gesture performed by the user is detected, the vehicle ECU 10 in the present embodiment moves the operation interfaces included in the screen that is being output from the display device in the front central portion of the vehicle to the display device at hand of the user.

According to such a configuration, the in-vehicle system according to one aspect of the present disclosure can improve operability when the user of the vehicle operates the in-vehicle equipment.

### (Second Embodiment)

In the first embodiment, in a case where the predetermined gesture is detected, the operation interfaces included in the screen are moved from the center display to the display device at hand of the user. However, a case is also assumed where convenience becomes higher for the user of the vehicle if the operation interfaces are returned from the display device at hand of the driver to the center display, such as a case where a person seated on the passenger's seat performs operation on behalf of the driver. Thus, in a second embodiment, processing of returning the operation interfaces moved from the center display to the display device at hand of the driver, to the center display again is performed.

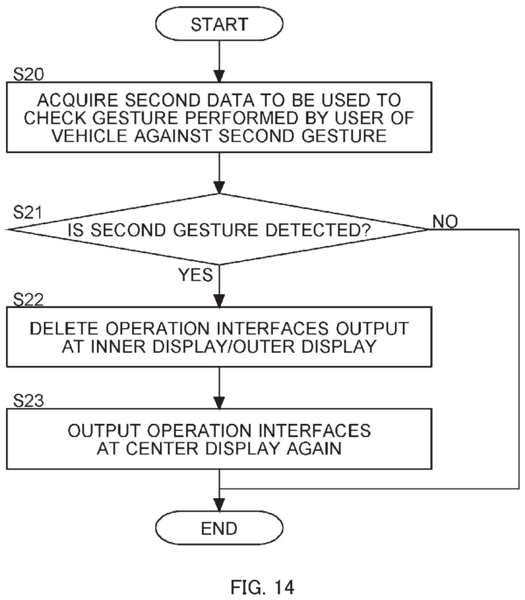

Fig. 14 is a flowchart of processing to be executed by the HMI controller 1011 according to the second embodiment. The processing indicated in Fig. 14 is executed subsequent to step S17 in Fig. 13. Note that in a case where the processing in Fig. 14 is executed again within a predetermined period since the processing in Fig. 14 has been executed once, the processing in Fig. 14 may be started from step S21.

In step S20, the HMI controller 1011 acquires second data that is data to be used to check the gesture performed by the user of the vehicle against a second gesture. Specifically, the HMI controller 1011 performs communication with an external device to acquire the second data. The second data may be, for example, feature data indicating a form of the second gesture to be used to perform pattern recognition to check the gesture performed by the user against the second gesture. For example, the second gesture may be a gesture of moving the hand in a direction opposite to the direction of the first gesture.

In step S21, the HMI controller 1011 determines whether or not the second gesture performed by the user is detected. In this event, the HMI controller 1011 checks the detected gesture against the second gesture included in the second data. Specifically, the HMI controller 1011 grasps a form of the gesture performed by the user and detected by the sensor and a form of the second gesture through pattern recognition and compares both. Then, the HMI controller 1011 checks the detected gesture against the second gesture, and in a case where both match, determines that the second gesture is detected. In the present step, a positive determination result is obtained in a case where the HMI controller 1011 determines that the second gesture performed by the user is detected.

In a case where a positive determination result is obtained in step S21, the processing transitions to step S22.

In a case where a negative determination result is obtained in step S21, the processing ends.

In step S22, the HMI controller 1011 deletes the operation interfaces (for example, the rewind button 42, the playback button 43, the fast-forward button 44, and the volume adjustment bar 45) output at the inner display 22 or the outer display 23 from the screen.

In step S23, the HMI controller 1011 outputs the operation interfaces deleted in step S22 at the center display 24. For example, the HMI controller 1011 executes processing of returning the rewind button 42, the playback button 43, the fast-forward button 44, and the volume adjustment bar 45 to the center display 24.

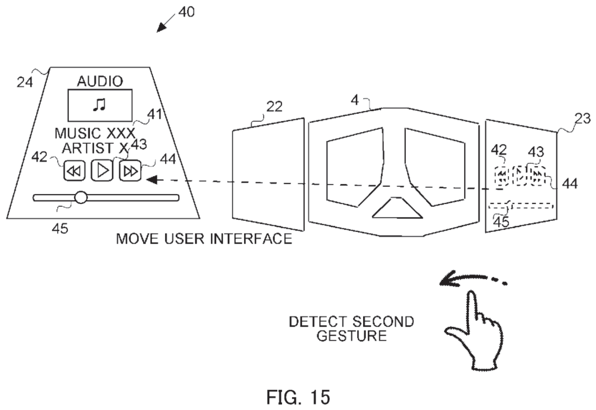

Fig. 15 is a view illustrating an aspect in which the operation interfaces move from the outer display 23. As illustrated in Fig. 15, a screen 40 is output at the center display 24. The screen 40 is the audio screen 803 similar to that in the first embodiment. As illustrated in Fig. 15, the screen 40 includes the title field 41, and the rewind button 42, the playback button 43, the fast-forward button 44, and the volume adjustment bar 45 which are operation interfaces.

As illustrated in Fig. 15, the HMI controller 1011 outputs the operation interfaces deleted in step S17 at the center display 24 again if the second gesture is detected. In this event, the HMI controller 1011 may delete the playback button 43 from the screen of the outer display 23.

As described above, in the second embodiment, the vehicle ECU 10 returns the operation interfaces output at the display device at hand of the driver from the display device at hand of the driver to the center display.

According to such a configuration, the in-vehicle system of the present disclosure can present the user interface at a more favorable position.

### (Other modifications)

The above-described embodiment is merely an example, and the present disclosure can be changed as appropriate within a range not deviating from the gist of the present disclosure.

For example, the processing and the means described in the present disclosure can be freely combined and implemented unless technical inconsistencies arise.

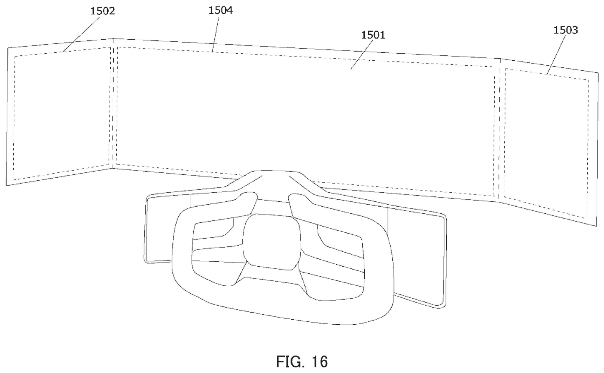

Further, while in the embodiment, a configuration has been described where the meter display 21, the inner display 22, and the outer display 23 are independent of each other, the respective displays do not necessarily have to be physically independent. The display device according to the present disclosure may be implemented by, for example, one display device 1501 as illustrated in Fig. 16. In the example in Fig. 16, a display device 1501 includes three display regions (display portions) separated by dashed lines. The display device 1501 may have a structure in which a display surface bends or is curved at portions of the dashed lines. In the illustrated example, a display region 1502 functions as the inner display 22, and a display region 1503 functions as the outer display 23. Further, a display region 1504 functions as the meter display 21.

Further, the processing described as being performed by one device may be shared and executed by a plurality of devices. Alternatively, the processing described as being performed by different devices may be executed by one device. In a computer system, hardware components (server components) that implement respective functions can be flexibly changed.

The present disclosure can be also implemented by a computer program implementing the functions described in the above embodiments being supplied to a computer, and one or more processors included in the computer reading and executing the program. Such a computer program may be provided to the computer by a non-transitory computer-readable storage medium that can be connected to a system bus of the computer or may be provided to the computer via a network. The non-transitory computer-readable storage medium includes, for example, any type of disc such as a magnetic disc (such as a Floppy (registered trademark) disc and a hard disc drive (HDD)), and an optical disc (such as a CD-ROM, a DVD disc and a Blu-ray disc), and any type of medium appropriate for storing an electronic command such as a read only memory (ROM), a random access memory (RAM), an EPROM, an EEPROM, a magnetic card, a flash memory, and an optical card.

## Claims

1. An in-vehicle system including a first display device and a second display device, the in-vehicle system comprising:
a storage configured to store first data that is data to be used to check a gesture performed by a user of a vehicle (1) and detected by a sensor against a first gesture; and
a processor configured to execute
detecting that the user has performed the first gesture based on the first data and an output of the sensor, and
in a case where the first gesture is detected, outputting at the second display device, a predetermined user interface included in content that is being output at the first display device.

2. An in-vehicle system including a first display device and a second display device, the in-vehicle system comprising:
a processor configured to execute
detecting a first gesture performed by a user of a vehicle (1) using a sensor, and
in a case where the first gesture is detected, outputting at the second display device, a predetermined user interface included in content that is being output at the first display device.

3. The in-vehicle system according to claim 2, wherein
the first display device is a display device arranged in a central portion of a vehicle (1) width direction in a front portion of the vehicle (1), and
the second display device is a display device including a pair of display units arranged at positions on both sides of a steering wheel (4) and including a touch panel (25).

4. The in-vehicle system according to claim 2, wherein the processor is configured to execute deleting the user interface output at the second display device in response to the first gesture, from a screen of the first display device.

5. The in-vehicle system according to claim 2, wherein the predetermined user interface includes a GUI component for operating a function of the vehicle (1).

6. The in-vehicle system according to claim 2, wherein the processor is configured to execute, in a case where the sensor detects a second gesture of the user of the vehicle (1), deleting the user interface output at the second display device from a screen of the second display device and outputting the user interface at the first display device again.

7. A vehicle (1) with the in-vehicle system according to any one of claims 2 to 6.

8. An information processing apparatus included in an in-vehicle system including a first display device and a second display device, the information processing apparatus comprising:
a processor configured to execute
detecting a first gesture performed by a user of a vehicle (1) using a sensor, and
in a case where the first gesture is detected, outputting at the second display device, a predetermined user interface included in content that is being output at the first display device.

9. The information processing apparatus according to claim 8, wherein
the first display device is a display device arranged in a central portion of a vehicle (1) width direction in a front portion of the vehicle (1), and
the second display device is a display device including a pair of display units arranged at positions on both sides of a steering wheel (4) and including a touch panel (25).

10. The information processing apparatus according to claim 8, wherein the processor is configured to execute deleting the user interface output at the second display device in response to the first gesture, from a screen of the first display device.

11. The information processing apparatus according to claim 8, wherein the predetermined user interface includes a GUI component for operating a function of the vehicle (1).

12. The information processing apparatus according to claim 8, wherein the processor is configured to execute, in a case where the sensor detects a second gesture of the user of the vehicle (1), deleting the user interface output at the second display device from a screen of the second display device and outputting the user interface at the first display device again.

13. An information processing method to be executed by an information processing apparatus included in an in-vehicle system including a first display device and a second display device, the information processing method comprising:
a step of detecting a first gesture performed by a user of a vehicle (1) using a sensor; and
a step of, in a case where the first gesture is detected, outputting at the second display device, a predetermined user interface included in content that is being output at the first display device.

14. The information processing method according to claim 13, wherein
the first display device is a display device arranged in a central portion of a vehicle (1) width direction in a front portion of the vehicle (1), and
the second display device is a display device including a pair of display units arranged at positions on both sides of a steering wheel (4) and including a touch panel (25).

15. A program for causing a computer to execute the information processing method according to any one of claims 13 to 14.
